(19) Europäisches Patentamt
European Patent Office
Office européen des brevets

(11) EP 3 460 409 A1

(12) EUROPEAN PATENT APPLICATION
published in accordance with Art. 153(4) EPC

(43) Date of publication:
27.03.2019 Bulletin 2019/13

(51) Int Cl.:
G01C 21/34 (2006.01)    G08G 1/0969 (2006.01)

(21) Application number: 17855577.7

(22) Date of filing: 01.09.2017

(86) International application number:
PCT/JP2017/031634

(87) International publication number:
WO 2018/061619 (05.04.2018 Gazette 2018/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 27.09.2016 JP 2016188337

(71) Applicants:
• AISIN AW CO., LTD.
Anjo-shi, Aichi 444-1192 (JP)
• TOYOTA JIDOSHA KABUSHIKI KAISHA
Toyota-shi, Aichi-ken, 471-8571 (JP)

(72) Inventors:
• IWATA, Tominori
Anjo-shi
Aichi 444-1192 (JP)
• TANIZAKI, Daisuke
Anjo-shi
Aichi 444-1192 (JP)

• NAGASE, Kenji
Anjo-shi
Aichi 444-1192 (JP)
• HIYOKAWA, Toyoji
Anjo-shi
Aichi 444-1192 (JP)
• KATO, Tatsuya
Anjo-shi
Aichi 444-1192 (JP)
• NAKAMURA, Motohiro
Toyota-shi
Aichi 471-8571 (JP)
• WATANABE, Kazunori
Toyota-shi
Aichi 471-8571 (JP)

(74) Representative: Kramer Barske Schmidtchen
Patentanwälte PartG mbB
European Patent Attorneys
Landsberger Strasse 300
80687 München (DE)

(54) ROUTE SEARCHING DEVICE, ROUTE SEARCHING SYSTEM, AND COMPUTER PROGRAM

(57) There are provided a route searching device, a route searching system, and a computer program that allow to search for a more appropriate route by identifying accurate travel time for a road based on traffic information, without increasing processing load. Specifically, each of current traffic information indicating traffic conditions at the present time and statistical traffic information which is statistical information obtained by collecting statistics of histories of traffic information is obtained, a degree of traffic congestion of a road at the present time is determined, and travel time for a road whose degree of traffic congestion is greater than or equal to a threshold is identified based on the current traffic information, and travel time for a road whose degree of traffic congestion is less than the threshold is identified based on the statistical traffic information. Then, a route search is performed using the identified travel time.

FIG. 5

**Description**

TECHNICAL FIELD

The present invention relates to a route searching device, a route searching system, and a computer program that search for a route to a destination, using traffic conditions of a road.

BACKGROUND ART

In recent years, a navigation device that provides vehicle travel guidance so that a driver can easily reach a desired destination has been often mounted on a vehicle. Here, the navigation device is a device that can detect a current location of the vehicle by a GPS receiver, etc., obtain map data for the current location through a recording medium such as a DVD-ROM or an HDD or a network, and display the map data on a liquid crystal monitor. Furthermore, the navigation device has a route search function that searches for, when a desired destination is inputted, an optimal route from a vehicle location to the destination. The navigation device sets the searched optimal route as a guided route, and displays the guided route on a display screen and provides audio guidance when, for example, the vehicle approaches an intersection, and thereby securely guides a user to the desired destination. In addition, in recent years, there have also been mobile phones, smartphones, tablet terminals, personal computers, etc., that have the same functions as those of the above-described navigation device.

In addition, the above-described route search function uses travel time which is the time required for the vehicle to pass through a road, as a factor for searching for a more optimal route to the destination. In addition, the travel time is collected using, for example, probe information or vehicle sensors or optical beacons installed on the road, and a value derived from traffic conditions at the present time can also be used or a value obtained by collecting statistics of past traffic conditions can also be used. For example, JP 2011-145134 A discloses a technique for identifying travel time for a link that requires short time to get from a point of departure, based on current traffic information obtained from an external source, and identifying travel time for a link that requires long time to get from the point of departure, based on a statistical value table obtained by collecting statistics of past travel time.

In the above-described Patent Literature, it is acknowledged that for a link that requires short time to get from a point of departure, travel time identified based on current traffic information has higher accuracy than travel time identified based on a statistical value. However, even if a link is one that requires short time to get from a point of departure, particularly, for a link with a small number of vehicles traveling therealong, since the number of samples is small, there are also many cases in which travel time identified from current traffic information has low accuracy. Hence, JP 2011-174792 A proposes a technique in which instead of using different types of traffic information depending on the time required from a point of departure, variances (dispersion) of current traffic information and statistical traffic information are calculated for each section forming a route, and travel time is identified using traffic information with a smaller variance.

CITATIONS LIST

PATENT LITERATURE

Patent Literature 1: JP 2011-145134 A (pp. 10-13)
Patent Literature 2: JP 2011-174792 A (pp. 4-6 and FIG. 2)

SUMMARY OF INVENTION

TECHNICAL PROBLEMS

However, a method in which variances of current traffic information and statistical traffic information are calculated for each section forming a route and comparison and selection are performed as in the above-described Patent Literature 2 has a problem that it takes time to identify travel time. In addition, there is also an increase in CPU's processing load. Furthermore, when current travel time is identified for a section where the number of vehicles traveling is greater than or equal to a certain number, it can be assumed without the need to make a comparison that current traffic information indicates current traffic conditions more accurately than statistical traffic information, and thus, it is obvious that the accuracy of travel time to be identified is also higher with the use of the current traffic information. Comparing variances even for such a section causes an increase in the above-described processing time or processing load.

The present invention is made to solve the above-described conventional problems, and provides a route searching device, a route searching system, and a computer program that allow to search for a more appropriate route to a destination based on accurate travel time, without greatly increasing processing load.

SOLUTIONS TO PROBLEMS

To provide the above-described route searching device, route searching system, and computer program, a route searching device according to the present invention includes: current traffic information obtaining means for obtaining current traffic information indicating traffic conditions at a present time; statistical traffic information obtaining means for obtaining statistical traffic information, the statistical traffic information being statistical information obtained by collecting statistics of histories of traffic information; traffic congestion level determining means for determining a degree of traffic congestion of a road at the present time; travel time identifying means for identifying travel time for a road whose degree of traffic congestion is greater than or equal to a threshold, based on the current traffic information, and identifying travel time for a road whose degree of traffic congestion is less than the threshold, based on the statistical traffic information; and route searching means for searching for a route to a destination, using the identified travel time.

In addition, a route searching system according to the present invention includes: current traffic information obtaining means for obtaining current traffic information indicating traffic conditions at a present time; statistical traffic information obtaining means for obtaining statistical traffic information, the statistical traffic information being statistical information obtained by collecting statistics of histories of traffic information; traffic congestion level determining means for determining a degree of traffic congestion of a road at the present time; travel time identifying means for identifying travel time for a road whose degree of traffic congestion is greater than or equal to a threshold, based on the current traffic information, and identifying travel time for a road whose degree of traffic congestion is less than the threshold, based on the statistical traffic information; and route searching means for searching for a route to a destination, using the identified travel time.

In addition, a computer program according to the present invention is a program for searching for a route to a destination. Specifically, the computer program causes a computer to function as: current traffic information obtaining means for obtaining current traffic information indicating traffic conditions at a present time; statistical traffic information obtaining means for obtaining statistical traffic information, the statistical traffic information being statistical information obtained by collecting statistics of histories of traffic information; traffic congestion level determining means for determining a degree of traffic congestion of a road at the present time; travel time identifying means for identifying travel time for a road whose degree of traffic congestion is greater than or equal to a threshold, based on the current traffic information, and identifying travel time for a road whose degree of traffic congestion is less than the threshold, based on the statistical traffic information; and route searching means for searching for a route to a destination, using the identified travel time.

ADVANTAGEOUS EFFECTS OF INVENTION

According to the route searching device, the route searching system, and the computer program according to the present invention that have the above-described configurations, when travel time for a road is identified, without the need of a complex process, current traffic information or statistical traffic information can be used as information identifying travel time, by appropriately switching those pieces of traffic information. As a result, without greatly increasing processing load, accurate travel time for the road can be identified, and furthermore, a more appropriate route to a destination can be searched for, using the accurate travel time.

BRIEF DESCRIPTION OF DRAWINGS

FIG. 1 is a block diagram showing a configuration of a navigation device according to the present embodiment.
FIG. 2 is a diagram showing examples of current traffic information.
FIG. 3 is a diagram showing an example of a method for determining a traffic congestion level.
FIG. 4 is a diagram showing examples of statistical traffic information.
FIG. 5 is a flowchart of a route search processing program according to the present embodiment.

DESCRIPTION OF EMBODIMENTS

A route searching device and a route searching system according to the present invention will be described in detail below based on one embodiment that embodies a navigation device 1 and with reference to the drawings. First, a schematic configuration of the navigation device 1 according to the present embodiment will be described using FIG.

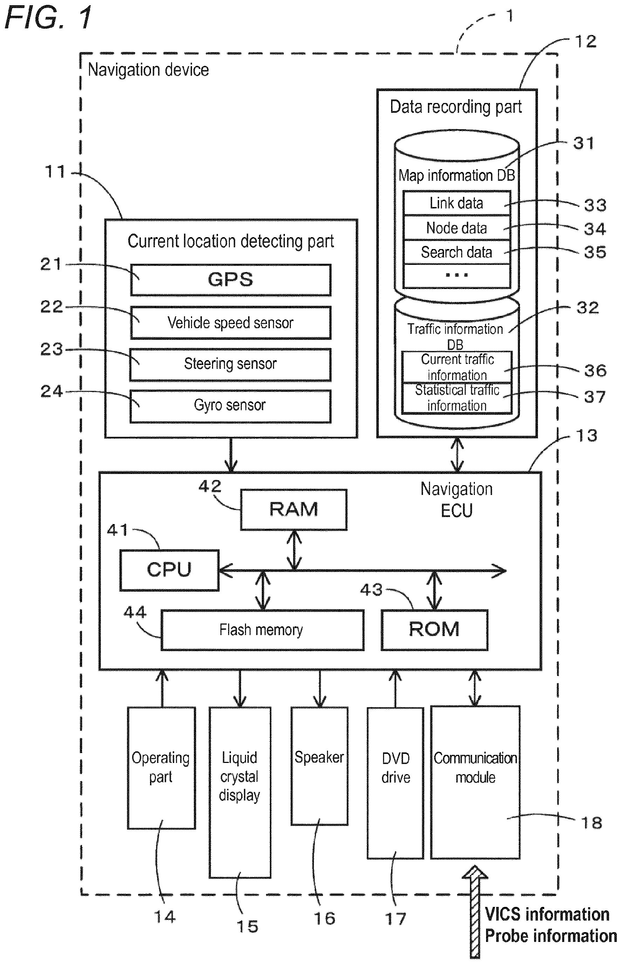

1. FIG. 1 is a block diagram showing the navigation device 1 according to the present embodiment.

As shown in FIG. 1, the navigation device 1 according to the present embodiment includes a current location detecting part 11 that detects a current location of a vehicle having the navigation device 1 mounted thereon; a data recording part 12 having various types of data recorded therein; a navigation ECU 13 that performs various types of arithmetic processing based on inputted information; an operating part 14 that accepts operations from a user; a liquid crystal display 15 that displays a map of an area around the vehicle or information about a guided route set on the navigation device 1 to the user; a speaker 16 that outputs audio guidance on route guidance; a DVD drive 17 that reads a DVD which is a storage medium; and a communication module 18 that performs communication with information centers such as a probe center and a VICS (registered trademark: Vehicle Information and Communication System) center.

Each component included in the navigation device 1 will be described below in turn.

The current location detecting part 11 includes a GPS 21, a vehicle speed sensor 22, a steering sensor 23, a gyro sensor 24, etc., and can detect the current location, orientation, and travel speed of the vehicle, the current time, etc. Here, particularly, the vehicle speed sensor 22 is a sensor for detecting the movement distance and vehicle speed of the vehicle, and generates pulses according to the rotation of drive wheels of the vehicle and outputs a pulse signal to the navigation ECU 13. Then, the navigation ECU 13 counts the generated pulses and thereby calculates the rotational speed of the drive wheels and a movement distance. Note that the navigation device 1 does not need to include all of the above-described four types of sensors, and the navigation device 1 may be configured to include only one or a plurality of types of sensors among those sensors.

In addition, the data recording part 12 includes a hard disk (not shown) serving as an external storage device and a recording medium; and a recording head (not shown) which is a driver for reading a map information DB 31, a traffic information DB 32, a predetermined program, etc., recorded on the hard disk, and for writing predetermined data to the hard disk. Note that the data recording part 12 may include a memory card or an optical disc such as a CD or a DVD instead of the hard disk. Note also that the map information DB 31 and the traffic information DB 32 may be stored on an external server, and the navigation device 1 may obtain the map information DB 31 and the traffic information DB 32 by communication.

Here, the map information DB 31 is storage means having stored therein, for example, link data 33 about roads (links), node data 34 about node points, search data 35 used in a route search process, facility data about facilities, map display data for displaying a map, intersection data about each intersection, and retrieval data for retrieving points.

In addition, for the link data 33, the following data is recorded: for each link forming a road, data representing the width, traveling direction, gradient, cant, bank, and state of a road surface of the road to which the link belongs, the number of lanes on the road, a point where the number of lanes decreases, a point where the width becomes narrower, a railroad crossing, etc., is recorded; for a corner, data representing the radius of curvature, an intersection, a T-junction, the entry and exit of the corner, etc., is recorded; for the attribute of a road, data representing a downhill slope, an uphill slope, etc., is recorded; and for a road type, data representing a toll road such as a national expressway, an urban expressway, a general toll road, and a toll bridge, in addition to a general road such as a national highway, a prefectural road, and a narrow street is recorded.

In addition, for the node data 34, there is recorded, for example, data about: the coordinates (locations) of actual road divergence points (also including intersections, T-junctions, etc.) and of node points that are set every predetermined distance for each road according to the radius of curvature, etc.; the attribute of a node indicating, for example, whether the node corresponds to an intersection; a connected link number list which is a list of link numbers of links connected to each node; an adjacent node number list which is a list of node numbers of nodes adjacent to a node through a link; the height (altitude) of each node point; and the like.

In addition, for the search data 35, there are recorded various types of data which are used in a route search process for searching for a route from a point of departure (e.g., a current vehicle location) to a set destination. Specifically, cost calculation data is stored which is used to calculate search costs such as a cost in which the degree of appropriateness of an intersection as a route is converted into numbers (hereinafter, referred to as intersection cost), and a cost in which the degree of appropriateness of a link forming a road as a route is converted into numbers (hereinafter, referred to as link cost).

On the other hand, the traffic information DB 32 is storage means having stored therein, for example, current traffic information 36 indicating traffic conditions at the present time and obtained from an external traffic information delivery server such as the VICS center; and statistical traffic information 37 which is statistical information obtained by collecting statistics of the histories of the current traffic information 36 and other traffic information.

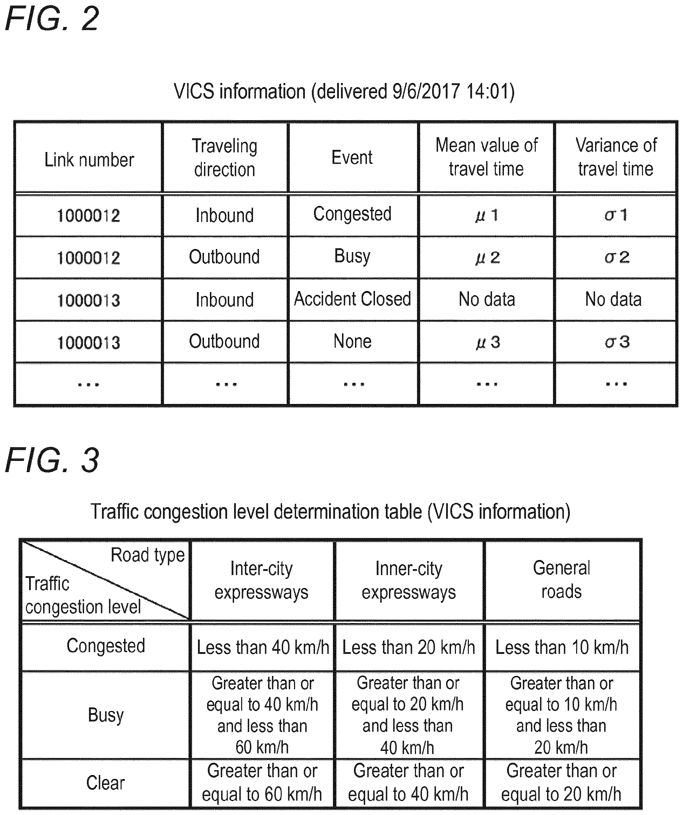

Here, the current traffic information 36 corresponds to VICS information obtained from the VICS center by communication and is, as shown in FIG. 2, information obtained for each section of a road and identifying an event (traffic congestion, an accident, construction, etc.) occurring at the present time and travel time (the time required to travel the section). Note that the information identifying travel time includes information identifying the mean value and variance of travel time collected during a period from the present time back to a predetermined time (e.g., 15 minutes ago). Note, however, that such information may not be included for, for example, a section where the number of samples is so small that calculation cannot be performed. In addition, for a section where traffic congestion has occurred, a traffic congestion level is also obtained as information identifying the degree of the traffic congestion. Note that the traffic congestion level is a parameter indicating the degree of traffic congestion by classifying it into a plurality of levels, and is determined based on an average vehicle speed of vehicles for each section of a road which is detected using a sensor, etc., installed on the road, and thresholds set for each road type. Here, the "average vehicle speed of vehicles" is, for example, a vehicle speed obtained by averaging, for each section of a road where a sensor is provided, the speeds of vehicles detected by the sensor during a period from the present time to 15 minutes ago. A single or a plurality of sensors may be provided for a road section. In the case of a single sensor, the passing speeds of vehicles detected by the sensor may be used as the speeds of the vehicles. In the case of a plurality of sensors, values each obtained by averaging the speeds of the same vehicle upon passing through each sensor may be used as the speeds of the vehicles, or passing speeds may be found from times at which the same vehicle passes through each sensor and a distance between the sensors, and used as the speeds of the vehicles.

For example, as shown in FIG. 3, for a general road, a section with an average vehicle speed of vehicles of less than 10 km/h is determined to be 'congested', a section with an average vehicle speed of vehicles of greater than or equal to 10 km/h and less than 20 km/h is determined to be 'busy', and a section with an average vehicle speed of vehicles of greater than or equal to 20 km/h is determined to be 'clear'. In addition, the current traffic information 36 is obtained such that it is classified by the traveling direction of a link. Note, however, that when only one traveling direction is associated with one link, classification by traveling direction is not necessarily required. In addition, the VICS center delivers the latest traffic information to the navigation device 1 every predetermined time (e.g., every five minutes). Note that for the current traffic information 36, in addition to VICS information, other information may be used as long as the information is traffic information indicating traffic conditions at the present time. For example, information obtained by vehicle-to-vehicle communication may be used. In addition, although the current traffic information 36 is real-time information, for example, VICS information has a drawback that roads that can be obtained are limited to main roads. In addition, there is a characteristic that since the number of samples is small for a road with a small amount of traffic, the influence of traffic lights, etc., is likely to be received, increasing errors.

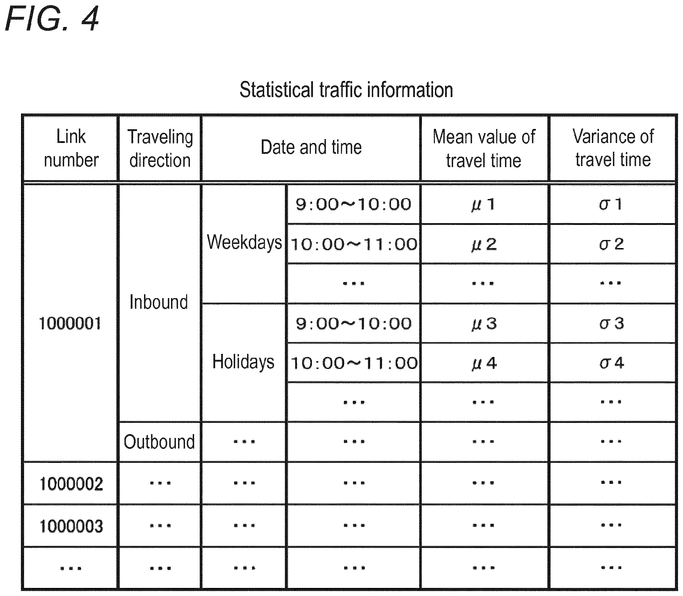

In addition, the statistical traffic information 37 is traffic information generated by the VICS center, the probe center, other external centers, or the navigation device 1 performing a statistical process on traffic information stored on a per predetermined interval (e.g., one month or one year) basis. For example, statistical traffic information 37 is generated by the probe center cumulatively storing probe information which is collected from each vehicle traveling across the country, and collecting statistics of the probe information. In addition, statistical traffic information 37 may be generated by the VICS center cumulatively storing VICS information and collecting statistics of the VICS information. Note that when statistical traffic information 37 is generated by an external center, the statistical traffic information 37 is delivered to the navigation device 1 from the external center on a regular basis (e.g., every other month). In addition, in the present embodiment, the statistical traffic information 37 is, as shown in FIG. 4, information identifying the mean value and variance of travel time for each link and each date and time (or day). Note that the statistical traffic information 37 is also identified by being classified by the traveling direction of a link. Note, however, that when only one traveling direction is associated with one link, classification by traveling direction is not necessarily required. Note that the statistical traffic information 37 is not real-time information as compared to the current traffic information 36, but has an advantage that the statistical traffic information 37 can be obtained targeting on more roads without limited to main roads. In addition, there is a characteristic that since the number of samples is larger than that of the current traffic information 36, there are only a few errors.

Particularly, in the present embodiment, the current traffic information 36 is traffic information collected during a period from the present time back to 15 minutes ago, and the statistical traffic information 37 is information obtained by collecting statistics of past traffic information with reference to, for example, day or the time of day. Note, however, that the period for collecting the current traffic information 36, the statistical standards for the statistical traffic information 37, etc., can be changed as appropriate.

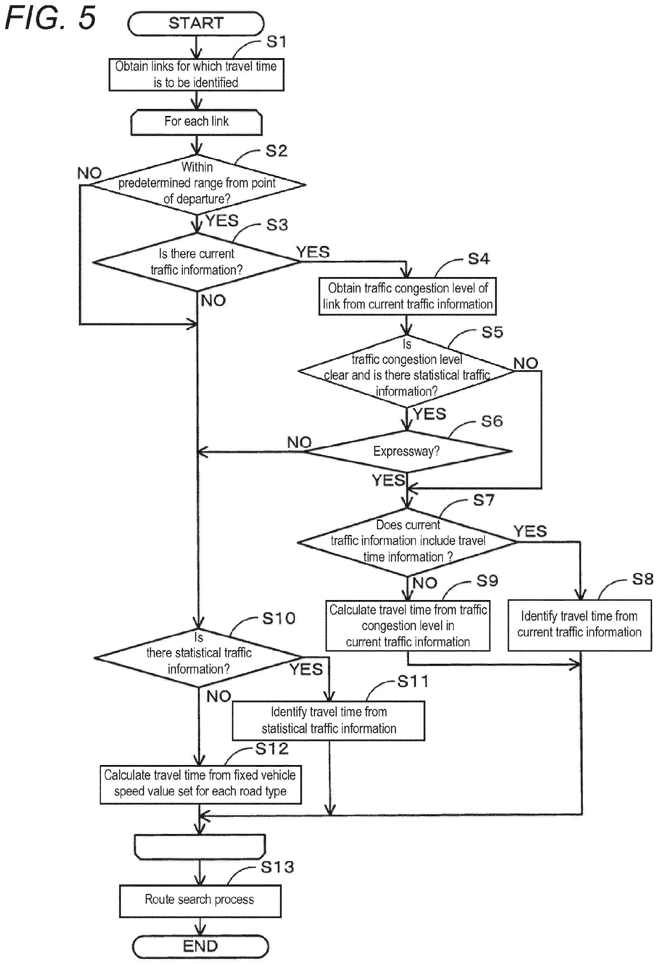

Meanwhile, the navigation ECU (electronic control unit) 13 is an electronic control unit that performs overall control of the navigation device 1, and includes a CPU 41 serving as a computing device and a control device; and internal storage devices such as a RAM 42 which is used as a working memory when the CPU 41 performs various types of arithmetic processing and which stores route data obtained when a route is searched for, etc., a ROM 43 having recorded therein a route search processing program (FIG. 5) which will be described later, etc., in addition to a program for control, and a flash memory 44 which stores a program read from the ROM 43. Note that the navigation ECU 13 includes various types of means serving as processing algorithms. For example, current traffic information obtaining means obtains current traffic information indicating traffic conditions at the present time. Statistical traffic information obtaining means obtains statistical traffic information which is statistical information obtained by collecting statistics of histories of traffic information. Traffic congestion level determining means determines the degree of traffic congestion of a road at the present time. Travel time identifying means identifies travel time for a road whose degree of traffic congestion is greater than or equal to a threshold, based on the current traffic information, and identifies travel time for a road whose degree of traffic congestion is less than the threshold, based on the statistical traffic information. Route searching means searches for a route to a destination using the identified travel time determined based on the traffic conditions.

The operating part 14 is operated when, for example, a point of departure which is a travel start point and a destination which is a travel end point are inputted, and includes a plurality of operating switches such as various types of keys and buttons (not shown). Then, based on switch signals outputted by, for example, pressing various switches, the navigation ECU 13 performs control to perform corresponding various types of operation. Note that the operating part 14 may include a touch panel provided on the front of the liquid crystal display 15. Note also that the operating part 14 may include a microphone and an audio recognition device.

In addition, on the liquid crystal display 15 there are displayed a map image including roads, traffic information, operation guidance, an operation menu, guidance on keys, a guided route set on the navigation device 1, guidance information according to the guided route, news, a weather forecast, time, an e-mail, a TV program, etc. Note that an HUD or an HMD may be used instead of the liquid crystal display 15.

In addition, the speaker 16 outputs audio guidance that provides guidance on travel along a planned travel route or guidance on traffic information, based on an instruction from the navigation ECU 13.

In addition, the DVD drive 17 is a drive that can read data recorded on a recording medium such as a DVD or a CD. Then, based on the read data, for example, music or video is played back or the map information DB 31 is updated. Note that a card slot for performing reading and writing on a memory card may be provided instead of the DVD drive 17.

In addition, the communication module 18 is a communication device for receiving traffic information transmitted from the aforementioned traffic information centers, e.g., the VICS center and the probe center, and corresponds, for example, to a mobile phone or a DCM.

Next, a route search processing program which is executed by the navigation device 1 having the above-described configuration will be described based on FIG. 5. FIG. 5 is a flowchart of the route search processing program according to the present embodiment. Here, the route search processing program is a program that is executed, for example, when a predetermined operation for starting a route search is accepted or when a condition for a re-search (rerouting) is satisfied, and that identifies particularly travel time for each link as traffic conditions of a road and searches for a route to a destination based on the identified travel time. Note that the program shown in the flowchart in the following FIG. 5 is stored in the RAM 42 or ROM 43 included in the navigation device 1, and executed by the CPU 41.

In the route search processing program, at step (hereinafter, abbreviated as S) 1, the CPU 41 obtains links and traveling directions for which travel time is to be identified. Specifically, all links that can form a recommended route from a point of departure (e.g., a current vehicle location) to a destination and traveling directions thereof are to be obtained.

Then, the following processes at and after S2 are performed for each link, with the links obtained at the above-described S1 being targets. Then, after performing processes at S2 to S12 on all target links, processing transitions to S13.

First, at S2, the CPU 41 determines, based on map information stored in the map information DB 31, whether a processing target link is present within a predetermined range from the point of departure. Note that "within a predetermined range from the point of departure" corresponds to, for example, a case in which a straight-line distance or a distance following a road from the point of departure is within a predetermined distance (e.g., within 10 km) or a case in which the time required from the point of departure is within a predetermined time (e.g., within 30 minutes). Note that the point of departure is basically a current vehicle location, but may be an arbitrary point specified by the user.

Then, if it is determined that the processing target link is present within the predetermined range from the point of departure (S2: YES), processing transitions to S3. On the other hand, if it is determined that the processing target link is not present within the predetermined range from the point of departure (S2: NO), processing transitions to S10. Note that since, when the processing target link is present outside the predetermined range from the point of departure, it is highly likely that traffic conditions may have been changed from the present time by the time the vehicle reaches the processing target link (i.e., current traffic information 36 obtained at the present time is not reliable), as will be described later, statistical traffic information 37 is used.

At S3, the CPU 41 determines whether there is current traffic information 36 about the processing target link and traveling direction, by referring to current traffic information 36 stored in the traffic information DB 32.

Then, if it is determined that there is current traffic information 36 about the processing target link and traveling direction (S3: YES), processing transitions to S4. On the other hand, if it is determined that there is no current traffic information 36 about the processing target link and traveling direction (S3: NO), processing transitions to S10.

At S4, the CPU 41 obtains a traffic congestion level of the processing target link at the present time by referring to the current traffic information 36 about the processing target link and traveling direction. Note that the traffic congestion level indicates, as described above, the degree of traffic congestion of a road by classifying it into a plurality of levels, and is identified as any one of 'clear', 'busy', and 'congested' based on the average vehicle speed of vehicles (FIG. 3). Note that the traffic congestion level may be included in the current traffic information 36 in advance, or an average vehicle speed may be calculated from average travel time stored in the current traffic information 36 and a link length, and the CPU 41 may identify the traffic congestion level based on the calculated average vehicle speed and a traffic congestion level determination table shown in FIG. 2. Furthermore, it is also possible to obtain the traffic congestion level of the link at the present time without using the current traffic information 36. For example, the traffic congestion level may be obtained using a camera or a sensor installed in the vehicle, or may be obtained from an external server that delivers traffic congestion information.

Then, at S5, the CPU 41 determines whether the traffic congestion level obtained at the above-described S4 is less than a threshold and there is statistical traffic information 37 about the processing target link and traveling direction, by referring to statistical traffic information 37 stored in the traffic information DB 32. Note that in the present embodiment the threshold which is a determination condition at the above-described S5 is 'busy'. Therefore, at the above-described S5, it is determined whether the traffic congestion level obtained at the above-described S4 is 'clear' and there is statistical traffic information 37 about the processing target link and traveling direction.

Then, if it is determined that the traffic congestion level obtained at the above-described S4 is less than the threshold ('clear') and there is statistical traffic information 37 about the processing target link and traveling direction (S5: YES), processing transitions to S6.

At S6, the CPU 41 determines whether the road type of the processing target link is an expressway, by referring to the map information DB 31. Note that it can be estimated that an expressway has very few factors that influence the speeds of vehicles, such as traffic lights, and thus, in current traffic information 36 about an expressway, information on travel time and a traffic congestion level has high reliability even if the number of samples is small.

Then, when it is determined that the road type of the processing target link is an expressway (S6: YES), it can be estimated that although the number of samples of the current traffic information 36 (the number of vehicles traveling) is small, the current traffic information 36 has relatively high reliability. Then, processing transitions to S7. On the other hand, when it is determined that the road type of the processing target link is not an expressway (S6: NO), it can be estimated that the number of samples of the current traffic information 36 (the number of vehicles traveling) is small and the current traffic information 36 has relatively low reliability. Then, processing transitions to S10.

On the other hand, if it is determined that the traffic congestion level obtained at the above-described S3 is greater than or equal to the threshold ('busy' or 'congested') or there is no statistical traffic information 37 about the processing target link and traveling direction (S5: NO), processing transitions to S7. The case in which the traffic congestion level is greater than or equal to the threshold is the case in which the number of samples of the current traffic information 36 (the number of vehicles traveling) is large and the current traffic information 36 has high reliability.

Thereafter, at S7, the CPU 41 determines whether the current traffic information 36 about the processing target link and traveling direction includes information identifying travel time, by referring to the current traffic information 36 stored in the traffic information DB 32.

Then, if it is determined that the current traffic information 36 about the processing target link and traveling direction includes information identifying travel time (S7: YES), processing transitions to S8. On the other hand, if it is determined that the current traffic information 36 about the processing target link and traveling direction does not include information identifying travel time (S7: NO), processing transitions to S9.

At S8, since there is current traffic information 36 with high reliability and the current traffic information 36 includes information identifying travel time, the CPU 41 identifies the travel time as travel time for the processing target link and traveling direction. Note that specifically the mean value and variance of travel time are identified.

On the other hand, at S9, since, although there is current traffic information 36 with high reliability, the current traffic information 36 does not include information identifying travel time, the CPU 41 calculates travel time for the processing target link and traveling direction, using the traffic congestion level. Specifically, first, an average vehicle speed of vehicles is estimated from the traffic congestion level for the processing target link and traveling direction which is identified from the current traffic information 36. Thereafter, a mean value of travel time is calculated from the link length and the estimated average vehicle speed of vehicles. Note that a relationship between the traffic congestion level and the average vehicle speed of vehicles is, as shown in FIG. 3, determined in advance for each road type. For example, when the traffic congestion level is 'busy' and the processing target link is a general road, the average vehicle speed is greater than or equal to 10 km/h and less than 20 km/h, and thus, for example, the average vehicle speed of vehicles is estimated to be 15 km/h which is a median value. On the other hand, the variance of travel time is a value that is set in advance for each traffic congestion level and each road type. Note that when the current traffic information 36 includes information identifying an average vehicle speed of vehicles, travel time may be calculated using the average vehicle speed included in the current traffic information 36.

In addition, at S10, the CPU 41 determines whether there is statistical traffic information 37 about the processing target link and traveling direction, by referring to the statistical traffic information 37 stored in the traffic information DB 32.

Then, if it is determined that there is statistical traffic information 37 about the processing target link and traveling direction (S10: YES), processing transitions to S11. On the other hand, if it is determined that there is no statistical traffic information 37 about the processing target link and traveling direction (S10: NO), processing transitions to S12.

At S11, the CPU 41 identifies travel time for the processing target link and traveling direction, using the statistical traffic information 37. Specifically, the mean value and variance of travel time associated with the processing target link, traveling direction, and current date and time are extracted from the statistical traffic information 37 (FIG. 4). Then, the extracted mean value and variance of travel time are identified as travel time for the processing target link and traveling direction.

On the other hand, at S12, since there are neither current traffic information 36 with high reliability nor statistical traffic information 37, the CPU 41 calculates travel time for the processing target link and traveling direction, based on the road type of the processing target link. Specifically, first, of vehicle speed values that are set in advance for each road type, a vehicle speed value associated with the road type of the processing target link is obtained. For example, it is assumed that a general road is 50 km/h, an expressway is 80 km/h, and a narrow street is 20 km/h. Thereafter, a mean value of travel time is calculated from the vehicle speed value identified based on the link length and the road type. On the other hand, the variance of travel time is a value that is set in advance for each road type.

Then, the processes at the above-described S2 to S12 are performed on all links and traveling directions obtained at the above-described S1, by which travel time is identified. Thereafter, processing transitions to S13.

At S13, the CPU 41 performs a route search process for a route from the point of departure to the destination, using the mean value and variance of travel time for each link obtained at the above-described S2 to S12. Specifically, using the publicly known Dijkstra's algorithm, a route with the smallest sum of cost values is determined to be a recommended route. Particularly, in the present embodiment, a sum S of the cost values of a route is calculated by the following equation (1):

[Expression 1]

$$S = (1-C)\sum_{i=0}^{N-1}\mu_i + C\sqrt{\sum_{i=0}^{N-1}\sigma_i^2} + \sum_{i=0}^{N-1}extra_i \cdots (1)$$

The mean value of travel time for each link forming a route:

$\mu_0, \mu_1, \mu_2, \ldots, \mu_{N-1}$

The variance of travel time for each link forming the route:

$\sigma_0^2, \sigma_1^2, \sigma_2^2, \ldots, \sigma_{N-1}^2$

Costs based on other factors for each link forming the route:

$extra_0, extra_1, extra_2, \ldots, extra_{N-1}$

A weight coefficient for dispersion of travel time: C

Note that in equation (1) C is the weight coefficient for dispersion of travel time, and is set to a value ranging from 0 to 1, as appropriate. Specifically, C is a cost coefficient for adjusting which one, obtaining an early arrival time at a destination or making less errors in an expected arrival time, is to emphasize to search for a route. For example, when C is close to 1, since the proportion occupied by the standard deviation of travel time for a sequence of links in the sum S of cost values is large, a route search is emphasized on making less errors in an expected arrival time. On the other hand, when C is close to 0, since the proportion occupied by the mean value of travel time for the sequence of links in the sum S of cost values is large, a route search is emphasized on obtaining an early arrival time.

In addition, the value of C in equation (1) may be set to a value according to a route search condition. For example, when the route search condition is "a route with high accuracy of an expected arrival time", C can be set to 0.8, and when the route search condition is "a route with an early arrival time", C can be set to 0.2. In that case, when the user selects a route search condition, the route searching means calculates cost values using a corresponding value of C.

On the other hand, the value of C in equation (1) may be selectable by the user in a stepwise or stepless manner. For example, the user is allowed to select an emphasis proportion position in display of a bar with "emphasis on the accuracy of an expected arrival time" and "emphasis on an early arrival time" at both ends thereof, and the value of C corresponding to the selected position is extracted. Then, the extracted value of C is transmitted to the route searching means, and the route searching means may calculate cost values using the value of C.

In addition, in the above-described equation (1), the costs (extra) based on other factors for a link are also considered. The costs include, for example, a cost based on the road type, a cost based on the number of lanes, a cost based on the traffic congestion level, and a cost based on costs required for traveling. Note, however, that cost values may be calculated using only the mean value and variance of travel time for a link as elements.

Thereafter, the navigation device 1 shows the user the recommended route which is searched for in the route search process at the above-described S13, through the liquid crystal display 15, etc. Then, based on a user operation performed thereafter, the shown recommended route is set as a guided route on the navigation device 1, and travel guidance based on the set guided route is provided.

As described in detail above, in the navigation device 1 according to the present embodiment and a computer program executed by the navigation device 1, each of current traffic information indicating traffic conditions at the present time and statistical traffic information which is statistical information obtained by collecting statistics of histories of traffic information is obtained, the degree of traffic congestion of a road at the present time is determined (S5), and traffic conditions for a road whose degree of traffic congestion is greater than or equal to the threshold are identified based on the current traffic information (S8 and S9), and travel time for a road whose degree of traffic congestion is less than the threshold is identified based on the statistical traffic information (S11). Then, a route search is performed using the identified travel time (S13), and thus, when travel time for a road is identified based on traffic information, without the need of a complex process, current traffic information or statistical traffic information can be used as information identifying travel time, by appropriately switching those pieces of traffic information. As a result, without greatly increasing processing load, accurate travel time for the road can be identified, and furthermore, a more appropriate route to a destination can be searched for, using the accurate travel time.

Note that the present invention is not limited to the above-described embodiment and various improvements and modifications may, of course, be made without departing from the spirit of the present invention.

For example, although, in the present embodiment, travel time for a link whose degree of traffic congestion in current traffic information 36 is 'clear' is identified using statistical traffic information 37, and travel time for a link whose degree of traffic congestion is 'busy' or 'congested' is identified using current traffic information 36, the threshold for switching the traffic information can be set as appropriate. For example, travel time for a link whose degree of traffic congestion is 'clear' or 'busy' may be identified using statistical traffic information 37, and travel time for a link whose degree of traffic congestion is 'congested' may be identified using current traffic information 36.

In addition, the reliability of each traffic information may be estimated based on the number of samples, based on which each traffic information is calculated, instead of based on the degree of traffic congestion, and switching between traffic information may be performed. Namely, the number of samples used to calculate current traffic information 36 may be compared with the number of samples used to calculate statistical traffic information 37, and travel time may be identified using traffic information with a larger number of samples (i.e., traffic information expected to have high reliability).

In addition, although, in the present embodiment, when the road type is an expressway, travel time for a link whose degree of traffic congestion in current traffic information 36 is 'clear' is also identified using the current traffic information 36, for example, when the road type is a toll road or a national highway, too, travel time may be identified using the current traffic information 36.

In addition, the present invention can be applied to various types of devices having a function of obtaining map information and traffic information, in addition to a navigation device. For example, the present invention can also be applied to a server device, a mobile phone, a smartphone, a tablet terminal, and a personal computer. Note that when the present invention is applied to a server device, for example, when a route search request is received from a terminal (a smartphone, etc.), the above-described route search processing program (FIG. 5) is executed and an identified route is delivered to the terminal which is a source of the route search request.

In addition, the present invention can also be applied to a system including a server and a communication terminal (a navigation device, a mobile phone, a smartphone, a tablet terminal, a personal computer, etc.). In that case, the configuration may be such that each step of the above-described route search processing program (FIG. 5) is performed by either one of the server and the communication terminal. For example, the server device may perform calculation of travel time and transmit a result of the calculation to the communication terminal, and the communication terminal may perform a route search using the travel time.

In addition, although an implementation example in which a route searching device according to the present invention is embodied is described above, the route searching device can also have the following configurations, and in that case, the following advantageous effects are provided.

For example, a first configuration is as follows:

A route searching device includes: current traffic information obtaining means (419 for obtaining current traffic information (36) indicating traffic conditions at a present time; statistical traffic information obtaining means (41) for obtaining statistical traffic information (37) which is statistical information obtained by collecting statistics of histories of traffic information; traffic congestion level determining means (41) for determining a degree of traffic congestion of a road based on the current traffic information; travel time identifying means (41) for identifying travel time for a road whose degree of traffic congestion is greater than or equal to a threshold, based on the current traffic information, and identifying travel time for a road whose degree of traffic congestion is less than the threshold, based on the statistical traffic information; and route searching means (41) for searching for a route to a destination, using the identified travel time.

According to the route searching device having the above-described configuration, when travel time for a road is identified, without the need of a complex process, current traffic information or statistical traffic information can be used as information identifying travel time, by appropriately switching those pieces of traffic information. As a result, without greatly increasing processing load, accurate travel time for the road can be identified, and furthermore, a more appropriate route to a destination can be searched for, using the accurate travel time.

In addition, a second configuration is as follows:
The current traffic information (36) includes information identifying a traffic congestion level obtained by classifying the degree of traffic congestion of the road into a plurality of levels based on a result of detection of vehicle speeds of vehicles traveling the road, and the travel time identifying means (41) identifies travel time for a section of the road whose traffic congestion level is clearest, based on the statistical traffic information, and identifies travel time for a section of the road other than the section whose traffic congestion level is clearest, based on the current traffic information (36).

According to the route searching device having the above-described configuration, when the number of samples used to calculate current traffic information is large, i.e., when the current traffic information has high reliability, travel time for the road can be identified based on the current traffic information; on the other hand, when the number of samples used to calculate current traffic information is small, i.e., when the current traffic information has low reliability, travel time for the road can be identified based on statistical traffic information. As a result, accurate travel time for the road can be identified based on the traffic information.

In addition, a third configuration is as follows:
The route searching device includes road type obtaining means (41) for obtaining a road type, and the travel time identifying means (41) identifies travel time for a road whose road type is a specific type, based on the current traffic information, even if a degree of traffic congestion of the road is less than the threshold.

According to the route searching device having the above-described configuration, when, even if the number of samples used to calculate current traffic information is small, the reliability of the current traffic information is estimated to be high, travel time for the road can be identified based on the current traffic information. As a result, accurate travel time for the road can be identified based on the traffic information.

In addition, a fourth configuration is as follows:
When the road type is an expressway, the travel time identifying means (41) identifies travel time for the road based on the current traffic information, even if a degree of traffic congestion of the road is less than the threshold.

According to the route searching device having the above-described configuration, travel time for an expressway whose current traffic information is estimated to have high reliability can be identified based on the current traffic information, even if the number of samples used to calculate the current traffic information is small. As a result, accurate travel time for the road can be identified based on the traffic information.

In addition, a fifth configuration is as follows:
With a road present within a predetermined range from a point of departure being a target, the travel time identifying means (41) identifies travel time for a road whose degree of traffic congestion is greater than or equal to the threshold, based on the current traffic information (36), and identifies travel time for a road whose degree of traffic congestion is less than the threshold, based on the statistical traffic information.

According to the route searching device having the above-described configuration, particularly, in a range which is present within a predetermined range from a point of departure and for which it is assumed that current traffic information can be effectively used, current traffic information is compared with statistical traffic information, and thus, without greatly increasing processing load, accurate travel time can be identified.

REFERENCE SIGNS LIST

1: Navigation device, 31: Map information DB, 36: Current traffic information, 37: Statistical traffic information, 41: CPU, 42: RAM, and 43: ROM

**Claims**

1. A route searching device comprising:

   current traffic information obtaining means for obtaining current traffic information indicating traffic conditions at a present time;
   statistical traffic information obtaining means for obtaining statistical traffic information, the statistical traffic information being statistical information obtained by collecting statistics of histories of traffic information;
   traffic congestion level determining means for determining a degree of traffic congestion of a road at the present time;
   travel time identifying means for identifying travel time for a road whose degree of traffic congestion is greater than or equal to a threshold, based on the current traffic information, and identifying travel time for a road whose degree of traffic congestion is less than the threshold, based on the statistical traffic information; and
   route searching means for searching for a route to a destination, using the identified travel time.

**2.** The route searching device according to claim 1, wherein

the current traffic information includes information identifying a traffic congestion level obtained by classifying the degree of traffic congestion of the road into a plurality of levels based on a result of detection of vehicle speeds of vehicles traveling the road, and

the travel time identifying means identifies travel time for a section of the road whose traffic congestion level is clearest, based on the statistical traffic information, and identifies travel time for a section of the road other than the section whose traffic congestion level is clearest, based on the current traffic information.

**3.** The route searching device according to claim 1 or 2, comprising road type obtaining means for obtaining a road type, wherein

the travel time identifying means identifies travel time for a road whose road type is a specific type, based on the current traffic information, even if the degree of traffic congestion of the road is less than the threshold.

**4.** The route searching device according to claim 3, wherein when the road type is an expressway, the travel time identifying means identifies travel time for the road based on the current traffic information, even if the degree of traffic congestion of the road is less than the threshold.

**5.** The route searching device according to any one of claims 1 to 4, wherein with a road present within a predetermined range from a point of departure being a target, the travel time identifying means identifies travel time for a road whose degree of traffic congestion is greater than or equal to the threshold, based on the current traffic information, and identifies travel time for a road whose degree of traffic congestion is less than the threshold, based on the statistical traffic information.

**6.** A route searching system comprising:

current traffic information obtaining means for obtaining current traffic information indicating traffic conditions at a present time;

statistical traffic information obtaining means for obtaining statistical traffic information, the statistical traffic information being statistical information obtained by collecting statistics of histories of traffic information;

traffic congestion level determining means for determining a degree of traffic congestion of a road based on the current traffic information;

travel time identifying means for identifying travel time for a road whose degree of traffic congestion is greater than or equal to a threshold, based on the current traffic information, and identifying travel time for a road whose degree of traffic congestion is less than the threshold, based on the statistical traffic information; and

route searching means for searching for a route to a destination, using the identified travel time.

**7.** A computer program for causing a computer to function as:

current traffic information obtaining means for obtaining current traffic information indicating traffic conditions at a present time;

statistical traffic information obtaining means for obtaining statistical traffic information, the statistical traffic information being statistical information obtained by collecting statistics of histories of traffic information;

traffic congestion level determining means for determining a degree of traffic congestion of a road at the present time;

travel time identifying means for identifying travel time for a road whose degree of traffic congestion is greater than or equal to a threshold, based on the current traffic information, and identifying travel time for a road whose degree of traffic congestion is less than the threshold, based on the statistical traffic information; and

route searching means for searching for a route to a destination, using the identified travel time.

## FIG. 1

```
┌─────────────────────────────────────────────────────────────────────┐
│  Navigation device                                              1     │
│                                                              12       │
│                                    ┌──────────────────────────┐      │
│                                    │   Data recording part    │      │
│                                    │                          │ 31   │
│                                    │  ┌────────────────────┐  │      │
│                                    │  │ Map information DB  │  │      │
│  ┌───────────────────────────┐     │  │ ┌────────────────┐ │  │ 33   │
│  │ Current location detecting│     │  │ │   Link data    │ │  │      │
│  │          part             │     │  │ ├────────────────┤ │  │ 34   │
│  │  ┌──────────────────────┐ │ 21  │  │ │   Node data    │ │  │      │
│  │  │        GPS           │ │     │  │ ├────────────────┤ │  │ 35   │
│  │  └──────────────────────┘ │     │  │ │  Search data   │ │  │      │
│  │  ┌──────────────────────┐ │ 22  │  │ ├────────────────┤ │  │      │
│  │  │ Vehicle speed sensor │ │     │  │ │      ...       │ │  │      │
│  │  └──────────────────────┘ │     │  │ └────────────────┘ │  │ 32   │
│  │  ┌──────────────────────┐ │ 23  │  │ Traffic information│  │      │
│  │  │   Steering sensor    │ │     │  │         DB         │  │      │
│  │  └──────────────────────┘ │     │  │ ┌────────────────┐ │  │ 36   │
│  │  ┌──────────────────────┐ │ 24  │  │ │ Current traffic│ │  │      │
│  │  │     Gyro sensor      │ │     │  │ │  information   │ │  │ 37   │
│  │  └──────────────────────┘ │     │  │ ├────────────────┤ │  │      │
│  └───────────────────────────┘     │  │ │Statistical traffic │  │   │
│                                    │  │ │  information   │ │  │      │
│                                    │  └────────────────────┘  │ 13   │
│                                    └──────────────────────────┘      │
└─────────────────────────────────────────────────────────────────────┘
```

- 11 Current location detecting part
  - 21 GPS
  - 22 Vehicle speed sensor
  - 23 Steering sensor
  - 24 Gyro sensor
- 12 Data recording part
  - 31 Map information DB
    - 33 Link data
    - 34 Node data
    - 35 Search data
    - ...
  - 32 Traffic information DB
    - 36 Current traffic information
    - 37 Statistical traffic information
- 13 Navigation ECU
  - 42 RAM
  - 41 CPU
  - 44 Flash memory
  - 43 ROM
- 14 Operating part
- 15 Liquid crystal display
- 16 Speaker
- 17 DVD drive
- 18 Communication module

**VICS information**
**Probe information**

## FIG. 2

VICS information (delivered 9/6/2017 14:01)

| Link number | Traveling direction | Event | Mean value of travel time | Variance of travel time |
|---|---|---|---|---|
| 1000012 | Inbound | Congested | $\mu 1$ | $\sigma 1$ |
| 1000012 | Outbound | Busy | $\mu 2$ | $\sigma 2$ |
| 1000013 | Inbound | Accident Closed | No data | No data |
| 1000013 | Outbound | None | $\mu 3$ | $\sigma 3$ |
| ... | ... | ... | ... | ... |

## FIG. 3

Traffic congestion level determination table (VICS information)

| Road type / Traffic congestion level | Inter-city expressways | Inner-city expressways | General roads |
|---|---|---|---|
| Congested | Less than 40 km/h | Less than 20 km/h | Less than 10 km/h |
| Busy | Greater than or equal to 40 km/h and less than 60 km/h | Greater than or equal to 20 km/h and less than 40 km/h | Greater than or equal to 10 km/h and less than 20 km/h |
| Clear | Greater than or equal to 60 km/h | Greater than or equal to 40 km/h | Greater than or equal to 20 km/h |

# FIG. 4

### Statistical traffic information

| Link number | Traveling direction | Date and time | | Mean value of travel time | Variance of travel time |
|---|---|---|---|---|---|
| 1000001 | Inbound | Weekdays | 9:00~10:00 | $\mu 1$ | $\sigma 1$ |
| | | | 10:00~11:00 | $\mu 2$ | $\sigma 2$ |
| | | | ・・・ | ・・・ | ・・・ |
| | | Holidays | 9:00~10:00 | $\mu 3$ | $\sigma 3$ |
| | | | 10:00~11:00 | $\mu 4$ | $\sigma 4$ |
| | | | ・・・ | ・・・ | ・・・ |
| | Outbound | ・・・ | ・・・ | ・・・ | ・・・ |
| 1000002 | ・・・ | ・・・ | ・・・ | ・・・ | ・・・ |
| 1000003 | ・・・ | ・・・ | ・・・ | ・・・ | ・・・ |
| ・・・ | ・・・ | ・・・ | ・・・ | ・・・ | ・・・ |

*FIG. 5*

START

S1
Obtain links for which travel time
is to be identified

For each link

S2
Within
predetermined range from point
of departure?

NO

YES  S3

Is there current
traffic information?

YES

NO

S4
Obtain traffic congestion level of
link from current traffic information

S5
Is
traffic congestion level
clear and is there statistical traffic
information?

NO

YES  S6

NO  Expressway?

YES

S7
Does current
traffic information include travel
time information ?

YES

NO  S9

S8

Calculate travel time from traffic
congestion level in
current traffic information

Identify travel time from
current traffic information

S10
Is
there statistical traffic
information?

YES

NO

S11
Identify travel time from
statistical traffic information

S12
Calculate travel time from fixed vehicle
speed value set for each road type

S13
Route search process

END

## INTERNATIONAL SEARCH REPORT

| | International application No. |
|---|---|
| | PCT/JP2017/031634 |

**A. CLASSIFICATION OF SUBJECT MATTER**
*G01C21/34*(2006.01)i, *G08G1/0969*(2006.01)i

According to International Patent Classification (IPC) or to both national classification and IPC

**B. FIELDS SEARCHED**

Minimum documentation searched (classification system followed by classification symbols)
G01C21/34, G08G1/0969

Documentation searched other than minimum documentation to the extent that such documents are included in the fields searched
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2005-242424 A (Hitachi, Ltd.),<br>08 September 2005 (08.09.2005),<br>claims 1 to 2; paragraphs [0022] to [0028],<br>[0071], [0073]; all drawings<br>(Family: none) | 1-2,6-7<br>3-5 |
| Y | JP 2009-288136 A (Clarion Co., Ltd.),<br>10 December 2009 (10.12.2009),<br>paragraphs [0004] to [0010]<br>(Family: none) | 3-5 |
| Y | JP 2011-145134 A (Clarion Co., Ltd.),<br>28 July 2011 (28.07.2011),<br>claims 1 to 2<br>(Family: none) | 5 |

☒ Further documents are listed in the continuation of Box C. ☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>21 September 2017 (21.09.17) | Date of mailing of the international search report<br>10 October 2017 (10.10.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
|---|
| PCT/JP2017/031634 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2002-286473 A  (Autonetworks Technologies, Ltd.), 03 October 2002 (03.10.2002), claims 1 to 2; paragraph [0038] (Family: none) | 1 |
| A | JP 2004-286565 A  (Xanavi Informatics Corp.), 14 October 2004 (14.10.2004), entire text; all drawings & US 2004/0225437 A1 entire text; all drawings & DE 102004005750 A1    & CN 1536514 A & KR 10-2004-0071083 A | 1-7 |
| A | JP 2007-179348 A  (Xanavi Informatics Corp.), 12 July 2007 (12.07.2007), entire text; all drawings (Family: none) | 1-7 |
| A | JP 2006-90872 A  (Aisin AW Co., Ltd.), 06 April 2006 (06.04.2006), entire text; all drawings & US 2006/0074551 A1 entire text; all drawings & EP 1640691 A2        & KR 10-2006-0051549 A & CN 1752717 A | 1-7 |

Form PCT/ISA/210 (continuation of second sheet) (January 2015)

**REFERENCES CITED IN THE DESCRIPTION**

**Patent documents cited in the description**

- JP 2011145134 A

- JP 2011174792 A